# EUROPEAN PATENT SPECIFICATION

(11) **EP 2 372 712 B1**
(45) Date of publication and mention of the grant of the patent: **07.09.2016**
(21) Application number: 11156392.0
(22) Date of filing: 01.03.2011
(51) Int. Cl.: G11B 20/10, G10L 21/038, H04B 14/04

(54) **Quantization bit rate expansion method and quantization bit rate expansion device**
Quantifizierungsbitratenexpansionsverfahren und Quantifizierungsbitratenexpansionsvorrichtung
Procédé d'extension de débit binaire de quantification et dispositif d'extension de débit binaire de quantification

(30) Priority: 03.03.2010 JP 2010046209
(43) Date of publication of application: 05.10.2011
(73) Proprietor: YAMAHA CORPORATION, Hamamatsu-shi Shizuoka-ken 430-8650 (JP)
(72) Inventor: Aoki, Ryotaro, Hamamatsu-shi Shizuoka (JP)
(74) Representative: Hoffmann Eitle

(56) References cited:
- EP-A2- 0 671 737
- JP-A- 4 354 208
- JP-A- 2004 180 017
- JP-A- 2005 106 933

## Description

### BACKGROUND OF THE INVENTION

### 1. Technical Field

The present invention relates to a method for expanding a quantization bit rate of a digital audio signal and a quantization bit rate expansion device of the digital audio signal.

### 2. Background Art

In JP 2004 180017 A, there is described a program for quantization bit extending. A computer is made to function as an extraction means which takes a level difference value for each sampling of N-bit data to extract the obtained value as a positive/negative change point, and extracts a point in time where the difference values of 0 continue for a period of the prescribed number of samplings as a no-change point, a means which generates a waveform change form pattern of extraction points when having extracted four consecutive positive/negative change points or non-change points, a means which extracts the pertinent pattern from a table of all waveform change form patterns recorded in a memory device, a processing distribution means for distribution to one of M-bit, (M>N), coding arithmetic processing preliminarily set corresponding to patterns and no-processing, a means for executing M-bit coding arithmetic processing, a means for executing averaging processing of energy equivalent conversion, and a means for outputting an M-bit data waveform.

In JP 2005 106933 A, there is described an apparatus and program for quantized bit extension processing. The apparatus is provided with an extracting means of extracting difference values of level in every sampling A-bit data and extracting as a non-change point a point of time when a difference value zero lasts for a specific quantity sampling time, a means of generating a waveform change style pattern of extracting points when four points are successively extracted, a means of extracting the pattern from a table of all waveform change style patterns, a processing allocation means of allocating one of B-bit, (B>A), coding arithmetic processing and no-processing, a means for executing B-bit coding arithmetic processing, and a means of calculating residues on an A-bit scale and B-bit data values at respective points, calculating the residue mean of residues of the specified number of precedent and following points, and deciding adaptation to the change pattern of the original B-bit data to adaptively perform averaging processing. [0002] Further, quality of an audio signal recorded on a CD (Compact Disc) that is the forefront of the digital audio field is determined by a 16 bits linear quantization bit rate at a sampling frequency of 44.1 kHz. When CDs have become commercially practical, the quantization bit rate has been considered to provide sufficient quality. However, audio sources and audio devices that provide 24 bits or 32 bits quantization bit rate at a sampling frequency of 48 kHz or 96 kHz have currently become prevalent.

When a CD is played back by such an audio device, it is preferable to expand the quantization bit rate of an audio signal from 16 bits to 24 bits or 32 bits in conformance with the performance of the audio device.

Methods and devices for expanding the quantization bit rate of a digital audio signal have hitherto been proposed (see; for instance, JP-7-248797A). Under a method described in connection with JP-7-248797A, a waveform frequently appeared in musical sound of a natural musical instrument, or the like, is previously stored as an amplitude pattern. When a waveform matching the amplitude pattern has appeared in small sound (sound substantially having a low quantization bit rate), the quantization bit rate is expanded by use of the stored amplitude pattern.

As mentioned above, the quantization bit rate expansion method described in connection with JP-A-7-248797 is intended for improving the quality of small sound including a substantially lower quantization bit rate and makes it possible to only improve the quality of the sound having the quantization bit rate of a waveform matching the previously-stored amplitude pattern. However, quantization noise in a low-bit signal is not generated by only small sound but arises in an entire waveform of the audio signal. In particular, the noise becomes conspicuous in an area where a slow change occurs in an amplitude. Further, if an attempt is made to expand the bit rate by means of sophisticated computation, there arises a problem of a necessity for high functional DSP (Digital Signal Processor).

### SUMMARY OF THE INVENTION

The present invention aims at providing a quantization bit rate expansion method and a quantization bit rate expansion device that make it possible to noticeably enhance sound quality by expanding the quantization bit rate of a digital audio signal through simple processing.

Aspects of the present invention are defined in the appended claims.

The present invention has been conceived by paying an attention to a flat period of a signal waveform that becomes conspicuous for quantization noise during reproduction and that has an amplitude which slowly changes, wherein a plurality of samples having a single sample value are continuous. In the present invention, a profile pattern, a preceding difference value, a subsequent difference value are determined by a magnitude of a difference between a sample of the flat period and the preceding sample and a magnitude of a difference between the flat period and the subsequent sample, the quantization bit rate in the flat period is expanded by use of the profile pattern, the preceding difference value, and the subsequent difference value. As mentioned above, in order to expand, through simple processing, the quantization bit rate of an area where quantization noise becomes most conspicuous, it becomes possible to effectively expand the quantization bit rate and improve the sound quality regardless of simple processing.

In the present invention, because the detailed waveform of the flat period is estimated by use of the table where a plurality of waveforms are previously stored, complicate computation such as spline computation becomes obviated, and real-time processing is facilitated. Further, so long as various waveforms, such as waveforms of actual musical instruments are stored in a table, it becomes possible to impart a characteristic of timbre to an audio signal that has been expanded in terms of the quantization bit rate.

### BRIEF DESCRIPTION OF THE DRAWINGS

Fig. 1 shows a configuration of a quantization bit rate expansion device according to an embodiment of the present invention.
Fig. 2 shows an example waveform of an audio signal processed by the quantization bit rate expansion device.
Figs. 3A to 3D show kinds of profile patterns for a signal waveform determined by the quantization bit rate expansion device.
Fig. 4 explains quantization bit rate expansion processing performed by the quantization bit rate expansion device.
Fig. 5 shows example details stored in an interpolation curve table.
Fig. 6 shows example details stored in the interpolation curve table.
Fig. 7 shows example quantization bit rate expansion processing of an up-sampled audio signal.
Fig. 8 shows example details stored in the interpolation curve table.
Figs. 9A and 9B show example details stored in the interpolation curve table.

### DETAILED DESCRIPTION OF THE EXEMPLARY EMBODIMENTS

A quantization bit rate expansion device according to an embodiment of the present invention is described by reference to the drawings. The quantization bit rate expansion device expands the quantization bit rate of a low bit-depth digital audio signal, thereby converting the signal into a high bit-depth digital audio signal. The quantization bit rate expansion device is built into; for instance, a reproduction device or a digital audio amplifier that reproduces data in a digital audio source, such as a CD. In the following descriptions, a digital audio signal is called simply an audio signal. In the present embodiment, an explanation is given to a device that receives an input of a 16-bit audio signal, and converts the signal into a 24-bit audio signal, and outputs the 24-bit audio signal. However, the number of bits of an input audio signal and the number of bits of an output audio signal in the present invention are not limited to those mentioned above.

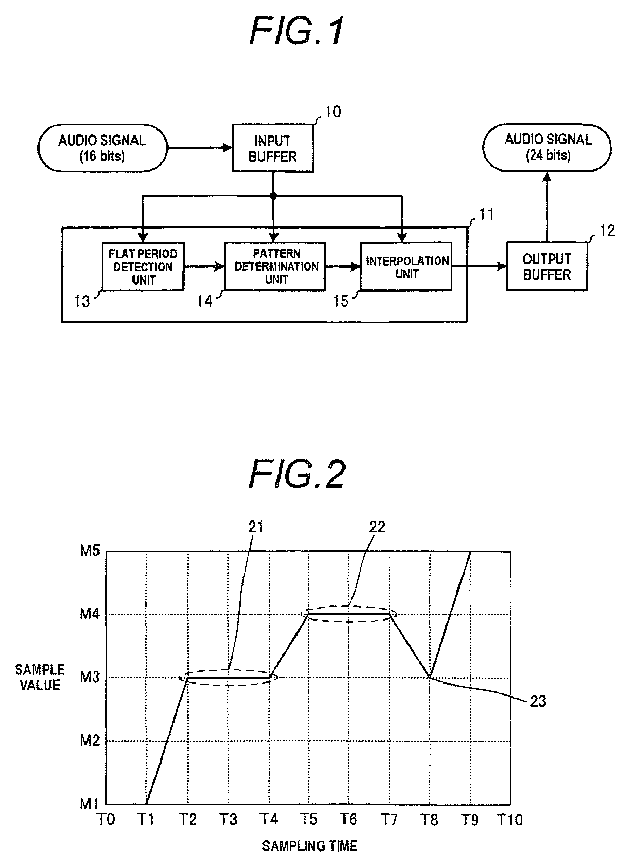

The quantization bit rate expansion device includes an input buffer 10, an expansion processing unit 11, and an output buffer 12. The expansion processing unit 11 includes a flat period detection unit 13, a pattern determination unit 14, and an interpolation unit 15. The input buffer 10 buffers stream input 16-bit audio signals for a predetermined period of time. The expansion processing unit 11 expands the quantization bit rate of the 16-bit audio signal buffered in the input buffer 10 to 24 bits. The expansion processing unit 11 detects, in the audio signal buffered in the input buffer 10, flat periods 21 and 22 (see Fig. 2) where two samples or more having a single value are in continual order and expands the quantization bit rate by performing processing for providing the flat periods 21 and 22 with ups and downs.

A range of ups and downs to be added by means of processing is a range of one quantizing interval of the original 16-bit audio signal (i.e., 1 LSB). The LSB (Least Significant Bit) means interval between quanta in the original 16-bit sampled value. Setting values of respective points so as to fall within a range of one LSB including the original sampled value is for preventing a resultant audio signal from falling outside the range of the original 16-bit sampled value, even if the quantization bit rate is expanded to 24 bits.

For instance, when quantization is performed by means of round-off operation, ups and downs are added within a range of "the original sampled value - 0.5 LSB ≤ a new sampled value < the original sampled value + 0.5 LSB".

When quantization is performed by means of round-down operation, ups and downs are added within a range of "the original sampled value ≤ a new sampled value < the original sampled value + 1 LSB".

The following descriptions provide a case where a 16-bit audio signal quantized by means of round-off operation is processed.

The expansion processing unit 11 buffers the audio signals subjected to expansion of the quantization bit rate in the output buffer 12. The audio signals buffered in the output buffer 12 are sequentially read by a device provided on a subsequent stage.

Processing of respective functional blocks of the expansion processing unit 11 are described hereinbelow.

The flat period detection unit 13 reads values of respective pieces of sample data of the audio signal buffered in the input buffer 10 and detects a flat period in which a plurality of samples having the single value are in continual order. Fig. 2 shows an example waveform of an input 16-bit audio signal. The flat periods 21 and 22 exist in the illustrated audio signal. The flat period 21 includes continual three samples acquired at sample timings T2, T3, and T4 in which a sample value is M3. The flat period 22 includes three continual samples acquired at sample timings T5, T6, and T7 in which a sample value is M4. The flat period detection unit 13 detects these flat periods 21, 22 and notifies the pattern determination unit 14 of a report to the effect.

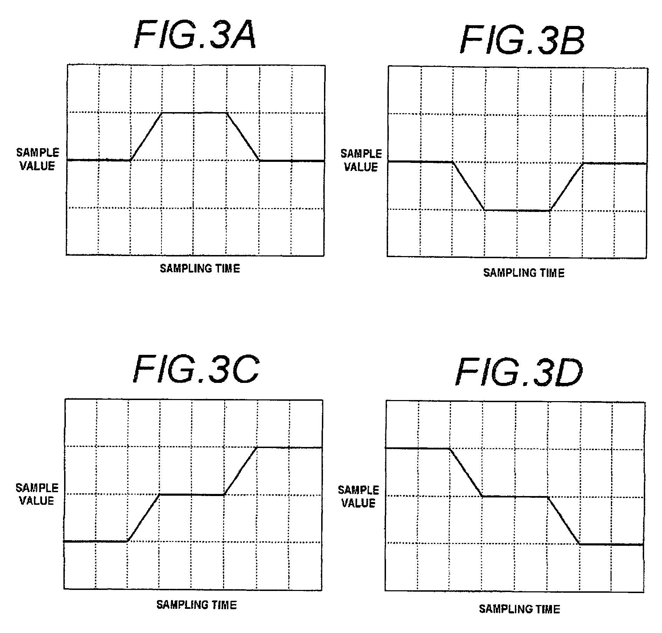

The pattern determination unit 14 determines a profile pattern of a waveform formed from the detected flat periods and sample values acquired around the respective flat periods. The thus-determined profile pattern is notified to the interpolation unit 15 provided on a subsequence stage. The interpolation unit 15 expands the quantization bit rate in each of the flat periods according to the profile pattern of the waveform. The profile pattern is classified into four types; namely, a hat-like profile pattern, an inverted hat-like profile pattern, a right-upward profile pattern, and a right-downward profile pattern. Figs. 3A to 3D show example waveforms of the respective profile patterns. The hat-like profile pattern (see Fig. 3A) assumes a shape in which an immediately preceding sample value is smaller than a sample value in a flat period and in which an immediately subsequent sample value is smaller than the sample value in the flat period. The inverted hat-like profile pattern (see Fig. 3B) assumes a shape in which an immediately preceding sample value is greater than a sample value in a flat period and in which an immediately subsequent sample value is greater than the sample value in the flat period. The right-upward profile pattern (see Fig. 3C) assumes a shape in which an immediately preceding sample value is smaller than a sample value in a flat period and in which an immediately subsequent sample value is greater than the sample value in the flat period. A right-downward profile pattern (see Fig. 3D) assumes a shape in which an immediately preceding sample value is greater than a sample value in a flat period and in which an immediately subsequent sample value is smaller than the sample value in the flat period. Therefore, the flat period 21 shown in Fig. 2 corresponds to the right-upward profile pattern. Further, the flat period 22 corresponds to the hat-like profile pattern.

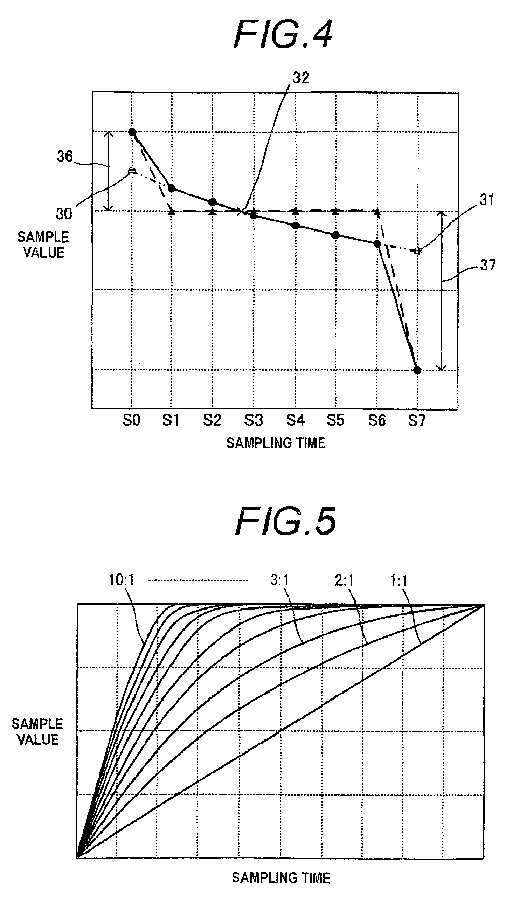

The interpolation unit 15 expands each of the sample values of the flat periods to 24 bits according to the profile pattern notified by the pattern determination unit 14. A method for expanding the quantization bit rate is hereunder described by reference to Figs. 4 through 6.

Fig. 4 shows a partial waveform of an audio signal including a flat period. In Fig. 4, samples plotted by means of triangular solid symbols connected by a broken line represent an original 16-bit audio signal. In the audio signal, six samples acquired at sampling times S1 through S6 correspond to a flat period.

First, during processing for expanding the quantization bit rate, a start point is set on an immediately preceding sampling time before the flat period, and an end point is set on an immediately subsequent sampling time after the flat period. In an example shown in Fig. 4, a start point 30 is set on a sampling time S0, and an end point 31 is set on a sampling time S7. The start point 30 and the end point 31 are sampling times that are simply used as a start point and an end point of an interpolation curve used for expanding the quantization bit rate of a sample value in the flat period (S1 to S6). Sample values of the sampling times cannot be rewritten.

A time length of a flat period is subjected to internal division by use of a difference (hereinafter called a "preceding difference") between a sample value acquired at an immediately preceding sampling time (hereinafter called an "immediately preceding sample value") and a sample value acquired in the flat period, and by use of a difference (hereinafter called a "subsequent difference") between a sample value acquired at an immediately subsequent sampling time (hereinafter called an "immediately subsequent sample value") and the sample value acquired in the flat period. An intermediate point is determined on the internally-divided time axis. In Fig. 4, a value (an absolute value) of a preceding difference 36 is one, and a value (an absolute value) of a subsequent difference 37 is two. Therefore, the intermediate point 32 is set at a position determined as a result of the flat period being internally divided at an internal division ratio of 1:2. The virtual intermediate point is a real value that is a result of accurate proportional division of the flat period and does not need to be in agreement with any of the sampling times (integral values) in the flat period.

Values, such as those provided below, are applied as sample values respectively to the start point, the intermediate point, and the end point for which the sampling times have been determined through processing mentioned above.

### (Hat-like profile pattern)

A start point: a value equal to or more than (a sample value of the flat period - 0.5 LSB)
An intermediate point: a value less than (a sample value of the flat period + 0.5 LSB)
An end point: a value equal to or more than (a sample value of the flat period - 0.5 LSB)

The reason why the values of the respective points are set so as to fall within a sample value ± 0.5 LSB of the flat period is that, even when the quantization bit rate is expanded to 24 bits, the thus-expanded value is prevented from falling outside the range of the original 16-bit sample value when returned to the original 16-bit data by means of round-off operation. Specifically, there are applied, for instance, the following values:
A start point: a value determined by a sample value of the flat period - 0.5 LSB
An intermediate point: a value determined by a sample value of the flat period + 0.49 LSB
An end point: a value determined by a sample value of the flat period - 0.5 LSB

The following values are likewise applied even in the case of another profile pattern.

### (Inverted hat-like profile pattern)

### (Standards)

A start point: a value equal to or less than (a sample value of the flat period + 0.5 LSB)
An intermediate point: a value equal to or more than (a sample value of the flat period - 0.5 LSB)
An end point: a value equal to or less than (a sample value of the flat period + 0.5 LSB)

The reason why the sample value of the start point and the sample value of the end point are set to a value equal to or less than (a sample value of the flat period + 0.5 LSB) rather than a value less than (a sample value of the flat period + 0.5 LSB) is that the start point and the end point are virtually set ends and that, even when the start point and the end point are set as mentioned above, a flat period where the quantization bit rate are actually expanded assumes a value which is smaller than the sample values (namely, a value less than (a sample value of the flat period + 0.5 LSB)).

### (Specific examples)

A start point: a value determined by a sample value of the flat period + 0.5 LSB
An intermediate point: a value determined by a sample value of the flat period - 0.5 LSB
An end point: a value determined by a sample value of the flat period + 0.5 LSB

### (Right-upward profile pattern)

### (Standards)

A start point: a value equal to or more than (a sample value of the flat period - 0.5 LSB)
An intermediate point: a value determined by a sample value of the flat period
An end point: a value equal to or less than (a sample value of the flat period + 0.5 LSB)

### (Specific examples)

A start point: a value determined by a sample value of the flat period - 0.5 LSB
An intermediate point: a value determined by a sample value of the flat period
An end point: a value determined by a sample value of the flat period + 0.5 LSB

### (Right-downward profile pattern)

### (Standards)

A start point: a value equal to or less than (a sample value of the flat period + 0.5 LSB)
An intermediate point: a value determined by a sample value of the flat period
An end point: a value equal to or more than (a sample value of the flat period - 0.5 LSB)

### (Specific examples)

A start point: a value determined by a sample value of the flat period + 0.5 LSB
An intermediate point: a value determined by a sample value of the flat period
An end point: a value determined by a sample value of the flat period - 0.5 LSB

In the case of the example shown in Fig. 4, the profile pattern is of a right-downward type. For this reason, a sample value of the start point 30 is set to a sample value of a flat period + 0.5 LSB. A sample value of the end point 31 is set to a sample value of the flat period - 0.5 LSB. A sample value of the intermediate point 32 is set to the sample value of the flat period.

The thus-determined three points (the start point 30, the intermediate point 32, and the end point 31) are connected to each other by means of an interpolation curve. For instance, a spline curve can be used as the interpolation curve. Sample values acquired at the respective sampling times (S1 to S6) in the flat period are taken as values at which the interpolation curve drawn through the procedures mentioned above has passed the sampling times. As a result, sample values can be determined at intervals (i.e., interval among 24 quantization bits) smaller than intervals among the original 16 quantization bits, so that the quantization bit rate can be expanded. Since the quantization bit rate is expanded within a range of ±0.5 LSB (16 bits), a bit depth can be increased in such a range that the bit depth does not deviate from the original 16-bit sample value.

Although the interpolation unit 15 may compute the interpolation curve in real time, the interpolation unit 15 can diminish processing amount and perform high-speed interpolation by application of table values, so long as interpolation curves are previously stored in a table.

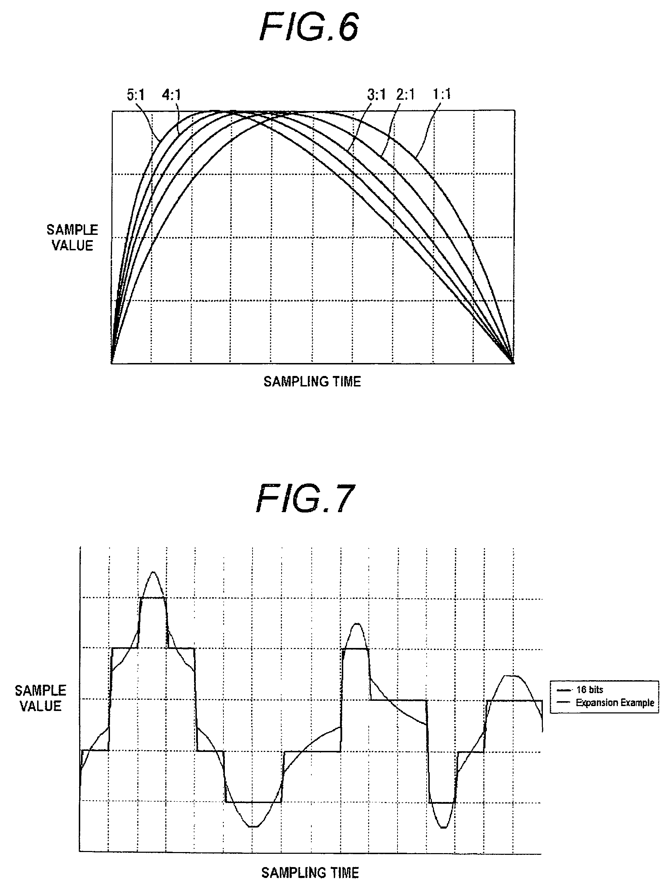

Fig. 5 and Fig. 6 show example values in an interpolation curve table in which are stored interpolation curves. Fig. 5 shows a right-upward interpolation curve table, and Fig. 6 shows a hat-like interpolation curve table.

Ten types of spline curves used for interpolating a flat period of right-upward profile pattern are stored in the interpolation curve table shown in Fig. 5. The respective spline curves are interpolation curves acquired when an internal division ratio between periods divided by the intermediate point ranges from 1:1 to 10:1. The time length (an "x" axis) of each of the respective spline curve is ten sampling clocks (eleven samples including both ends). The interpolation curve table shown in Fig. 6 stores five types of spline curves for interpolating a hat-like flat period. The respective spline curves are interpolation curves acquired when the internal division ratio between periods divided by an intermediate point ranges from 1:1 to 5:1. The time length (the "x" axis) of each of the respective spline curve is ten sampling clocks (eleven samples including both ends).

When a profile pattern, the preceding and subsequent differences, and the length (a length between a start point and an end point) of the flat period are detected, an appropriate interpolation curve is read from the interpolation curve table, and the thus-read curve is applied. Sample values of the respective sampling times of the flat period can thus be determined.

Figs. 5 and 6 show the right-upward interpolation curve table and the hat-like interpolation curve table, respectively. In relation to the right-downward interpolation curve table and the inverted hat-like interpolation curve table, the curves of these tables are used while inverted upside down. When the internal division ratio ranges from 1:1 to 1:10, the curves of these tables are used while laterally inverted. Further, the spline curves are used while their time lengths are expanded or contracted according to the length of the flat period. Moreover, when an internal division ratio differs from the internal division ratios of the spline curves stored in the interpolation curve table, values of the two spline curves adjacent to the internal division ratio are interpolated, and a spline curve for the internal division ratio is determined. When the internal division ratio exceeds the maximum value in the table specifying the spline curve, the spline curve for the maximum value is used. For instance, when spline curves for the internal division ratios of 1:1 to 10:1 are specified in the table and when a waveform whose ratio exceeds 10:1 is input, a spine curve having an internal division ratio of 10:1 is used for interpolating the waveform.

The interpolation curves stored in the interpolation curve table are not limited to spline interpolation. For instance, a waveform curve determined by sampling an actual audio signal may be also stored as an interpolation curve. Moreover, it is also possible to set preferred timbre by replacing or switching the interpolation curve table, as required.

Fig. 7 shows an example in which the quantization bit rate expansion method of the present invention is applied to an up-sampled audio signal. The drawing shows an example audio signal up-sampled by a factor of eight. By virtue of eight times up-sampling, data pertaining to the single sample value appear as continual eight samples. Hence, the waveform of the audio signal includes iteration of a flat period having eight samples. When the quantization bit rate of such an audio signal is expanded by use of the quantization bit rate expansion method of the present invention, a waveform like an illustrated waveform is obtained, and a characteristic waveform that differs from a waveform smoothed by use of a simple low-pass filter, or the like, can be produced.

The above is directed toward an explanation of a case where the bit rate in a flat period including two or more continual identical samples are expanded. However, even in relation to an irregularity of one sample, like a valley 23 shown in Fig. 2, the quantization bit rate can be expanded by use of the foregoing technique.

In the embodiment, when the quantization bit rate in the hat-like flat period is expanded, the height (a sample value) of the intermediate point is uniformly set to a sample value of the flat period + 0.49 LSB regardless of the length of the flat period and magnitudes of preceding and subsequent differences from the flat period. Alternatively, the height of the intermediate point can also be changed according to the length of the flat period and the magnitudes of the preceding and subsequent differences.

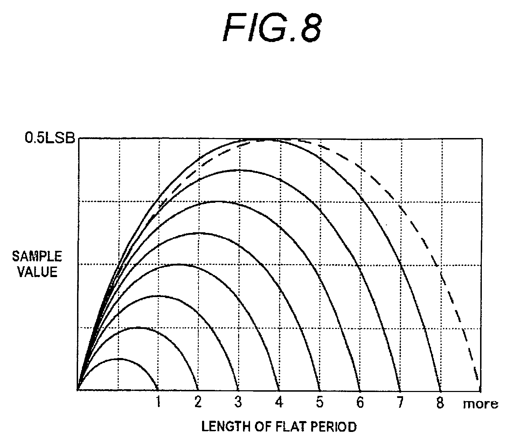

Fig. 8 shows example interpolation curves stored in the interpolation curve table when the height of the intermediate point is changed according to the length of the flat period. Specifically, in the case of a hat-like flat period, a rise is considered to be greater as the flat period becomes longer, and the intermediate point is also considered to become higher. For these reasons, the interpolation curve table stores interpolation curves including intermediate points whose heights are synchronized with the length of the flat period. When the length of the flat period is one sample, an intermediate point is set to a value that is higher than the sample value of the original flat period by 0.0625 LSB. The height of the intermediate point is increased in increments of 0.0625 LSB every time the length of the flat period becomes longer by one sample. When the length of the flat period is eight samples, the intermediate point is set to 0.5 LSB (or 0.49 LSB). When the length of the flat period exceeds eight samples, the interpolation curve including an intermediate point whose height is 0.5 LSB is expanded in the direction of the time axis, to thus be interpolated. It thereby becomes possible to expand the quantization bit rate corresponding to the length of the flat period within a range where 0.5 LSB of original data is not exceeded. When the length of the flat period is one sample (of a protruding type), the value of the intermediate point may also be made smaller than the sample value of the original flat period (a protruding portion).

Fig. 8 shows an example when the intermediate point is located in the center of the flat period (a case where a preceding difference and a subsequent difference are equal to each other). Further, when a value of the preceding difference and a value of the subsequent difference differ from each other, the interpolation curve is deformed such that a point which internally divides the flat period at the ration becomes an intermediate point.

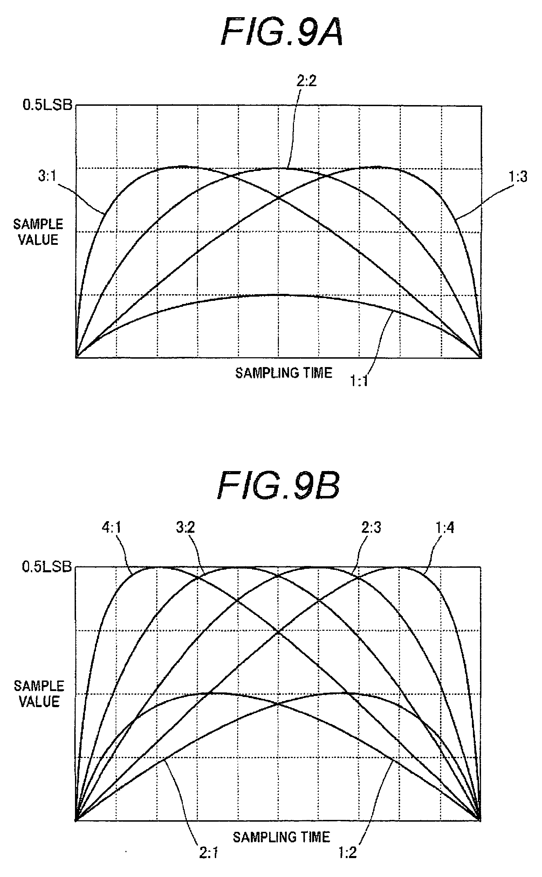

Next, Figs. 9A and 9B show example curves stored in the interpolation curve table when the height of the intermediate point is changed according to the value of the preceding difference and the value of the subsequent difference. Specifically, when the profile pattern is hat-like, a rise is considered to be steep as preceding and subsequent differences become greater, and the intermediate point of the pattern is also considered to be high. For this reason, the interpolation curve table stores interpolation curves commensurate with a value of a total height of a preceding-and-subsequent difference (= a preceding difference + a subsequent difference). Fig. 9A shows interpolation curves for a case where a preceding-and-subsequent difference is two and four. Further, Fig. 9B shows interpolation curves for a case where a preceding-and-subsequent difference is three and five.

A preceding-and-subsequent difference of two includes a combination of a preceding difference assuming a value of one and a subsequent difference assuming a value of one (1:1). In this case, the intermediate point lies in the center of the flat period shown in Fig. 9A. An interpolation curve having a height of 0.125 LSB is applied to a flat period, thereby expanding the quantization bit rate.

A preceding-and-subsequent difference of three includes a combination of a preceding difference assuming a value of two with a subsequent difference assuming a value of one (2:1) or a combination of a preceding difference assuming a value of one and a subsequent difference assuming a value of two (1:2). In this case, an interpolation curve (2:1 or 1:2) that is shown in Fig. 9B and that has a height of 0.25 LSB is applied to a flat period, thereby expanding the quantization bit rate.

A preceding-and-subsequent difference of four includes a combination of a preceding difference assuming a value of two with a subsequent difference assuming a value of two (2:2), a combination of a preceding difference assuming a value of three with a subsequent difference assuming a value of one (3:1), and a combination of a preceding difference assuming a value of one with a subsequent difference assuming a value of three (1:3). In this case, an interpolation curve (3:1, 2:2, or 1:3) that is shown in Fig. 9A and that has a height of 0.375 LSB is applied to a flat period, thereby expanding the quantization bit rate.

Likewise, a preceding-and-subsequent difference of five includes a combination of a preceding difference assuming a value of four with a subsequent difference assuming a value of one (4:1), a combination of a preceding difference assuming a value of three with a subsequent difference assuming a value of two (3:2), a combination of a preceding difference assuming a value of two with a subsequent difference assuming a value of three (2:3), and a combination of a preceding difference assuming a value of one with a subsequent difference assuming a value of four (1:4). In this case, an interpolation curve (4:1, 3:2, 2:3, or 1:4) that is shown in Fig. 9B and that has a height of 0.5 LSB is applied to a flat period, thereby expanding the quantization bit rate.

In Figs. 9A and 9B, when the preceding-and-subsequent difference exceeds a value of five, a sample value for the intermediate point is set to "a sample value of a flat period + 0.49 LSB" in the same manner as shown in Fig. 6. The interpolation curve is deformed according to an internal division ratio, thereby expanding the quantization bit rate in the flat period.

Figs. 8, 9A, and 9B provide illustrations for a case where the profile pattern of the flat period is hat-like. In the case of an inverted hat-like profile pattern, the interpolation curves shown in Figs. 8, 9A, and 9B are applied while inverted upside down.

The above embodiment has provided, as waveform estimation elements, a ratio of a preceding difference (value) to a subsequent difference (value), the number of continual samples in a flat period, and a preceding-and-subsequent difference. However, elements other than those mentioned above may be also used as the waveform estimation elements. It is also possible to estimate a detailed waveform not only by sole use of any one of the waveform estimation elements but also by a combination of any of the waveform estimation elements. For instance, there is a combination of a ratio of a preceding difference (a value) to a subsequent difference (a value) with the number of continual samples in a flat period, a combination of the number of continual samples in a flat period with a preceding-and-subsequent diffidence, or the like.

## Claims

1. A method for expanding a quantization bit rate of a digital audio signal, the method comprising:
a flat period detection step of detecting, from the digital audio signal, a flat period (21, 22) that indicates a period including a plurality of continual samples having a single sample value;
***characterized by***
a pattern determination step of determining a profile pattern of the flat period according to a positive or negative sign of a preceding difference value (36) that indicates a difference determined by subtracting a sample value of a sample immediately preceding the flat period (21, 22) from a sample value of the flat period (21, 22), and a positive or negative sign of a subsequent difference value (37) that indicates a difference determined by subtracting the sample value of the flat period (21, 22) from a sample value of a sample immediately subsequent to the flat period (21, 22);
a waveform estimation step of estimating a detailed waveform that is higher in resolution than a waveform of the audio signal in the flat period according to a waveform estimation element including the determined profile pattern and at least one of a ratio of the preceding difference value (36) to the subsequent difference value (37) and the number of continual samples in the flat period (21, 22); and
a sample value determination step of determining, from the detailed waveform, sample values for respective sampling times of the flat period (21, 22) by means of a quantization bit rate that is higher than the quantization bit rate of the audio signal.

2. The method according to claim 1, wherein
the waveform estimation step includes estimating the detailed waveform by selecting a detailed waveform from a plurality of waveforms previously stored in a table according to the profile pattern and the ratio of the preceding difference value (36) to the subsequent difference value (37).

3. The method according to claim 1 or 2, wherein
the pattern determination step is a step of determining the profile pattern of the flat period (21, 22) as a hat-like profile pattern in the case of a positive preceding difference value and a negative subsequent difference value, the profile pattern of the flat period (21, 22) as an inverted hat-like profile pattern in the case of a negative preceding difference value and a positive subsequent difference value, the profile pattern of the flat period (21, 22) as a right-upward profile pattern in the case of a positive preceding difference value and a positive subsequent difference value, and the profile pattern of the flat period (21, 22) as a right-downward profile pattern in the case of a negative preceding difference value and a negative subsequent difference value, and
the waveform estimation step is a step of estimating a hat-like detailed waveform in which an intermediate portion of the flat period (21, 22) becomes high when the profile pattern is determined to be the hat-like profile pattern, an inverted hat-like detailed waveform in which an intermediate portion of the flat period (21, 22) becomes low when the profile pattern is determined to be the inverted hat-like profile pattern, a right-upward detailed waveform in which a right end of the flat period (21, 22) becomes high when the profile pattern is determined to be the right-upward profile pattern, and a right-downward detailed waveform in which a right end of the flat period (21, 22) becomes low when the profile pattern is determined to be the right-downward profile pattern.

4. The method according to claim 3, wherein
the waveform estimation step includes determining a value of the intermediate portion based on the number of samples in the flat period (21, 22) when the profile pattern is determined to be the hat-like or inverted hat-like profile pattern.

5. The method according to claim 3, wherein
the waveform estimation step includes determining a position of an intermediate point (32) in the flat period (21, 22) based on the ratio of the preceding difference value (36) to the subsequent difference value (37) when the profile pattern is determined to be the right-upward or right-downward profile pattern.

6. The method according to any one of claims 1 through 5, wherein
the waveform estimation step includes estimating the detailed waveform within a range of one quantizing interval of the audio signal including a sample value for the audio signal.

7. A quantization bit rate expansion device, comprising:
an input unit (10) to which a digital audio signal is input;
a flat period detection unit (13) that is configured to detect, from the audio signal, a flat period (21, 22) including a plurality of continual samples which have a single sample value;
***characterized by***
a pattern determination unit (14) that is configured to determine a profile pattern of the flat period (21, 22) according to a positive or negative sign of a preceding difference value (36) that indicates a difference determined by subtracting a sample value of a sample immediately preceding the flat period (21, 22) from a sample value of the flat period (21, 22) and a positive or negative sign of a subsequent difference value (37) that indicates a difference value determined by subtracting the sample value of the flat period (21, 22) from a sample value of a sample immediately subsequent to the flat period (21, 22);
a waveform estimation unit that is configured to estimate a detailed waveform that is higher in resolution than a waveform of the audio signal in the flat period (21, 22) according to a waveform estimation element including the determined profile pattern and at least one of a ratio of the preceding difference value (36) to the subsequent difference value (37) and the number of continual samples in the flat period (21, 22); and
a sample value determination unit that is configured to determine, from the detailed waveform, sample values for respective sampling times of the flat period (21, 22) by means of a quantization bit rate that is larger than the quantization bit rate of the audio signal.

8. The quantization bit rate expansion device according to claim 7, wherein
the waveform estimation unit has a table in which a plurality of waveforms are stored and the waveform estimation unit is configured to select the detailed waveform from the plurality of waveform stored in the table according to the profile pattern and the ratio of the preceding difference value (36) to the subsequent difference value (37), thereby estimating the detailed waveform.

9. The quantization bit rate expansion device according to claim 7 or 8, wherein
the pattern determination unit (14) is configured to determine the profile pattern of the flat period (21, 22) as a hat-like profile pattern in the case of a positive preceding difference value (36) and a negative subsequent difference value (37), the profile pattern of the flat period (21, 22) as an inverted hat-like profile pattern in the case of a negative preceding difference value (36) and a positive subsequent difference value (37), the profile pattern of the flat period (21, 22) as a right-upward profile pattern in the case of a positive preceding difference value (36) and a positive subsequent difference value (37), and the profile pattern of the flat period (21, 22) as a right-downward profile pattern in the case of a negative preceding difference value (36) and a negative subsequent difference value (37); and
the waveform estimation unit is configured to estimate a hat-like detailed waveform in which an intermediate portion of the flat period (21, 22) becomes high when the profile pattern is determined to be the hat-like profile pattern, an inverted hat-like detailed waveform in which an intermediate portion of the flat period (21, 22) becomes low when the profile pattern is determined to be the inverted hat-like profile pattern, a right-upward detailed waveform in which a right end of the flat period (21, 22) becomes high when the profile pattern is determined to be the right-upward profile pattern, and a right-downward detailed waveform in which a right end of the flat period (21, 22) becomes low when the profile pattern is determined to be the right-downward profile pattern.

10. The quantization bit rate expansion device according to claim 9, wherein
the waveform estimation unit is configured to determine a value of the intermediate portion based on the number of samples in the flat period (21, 22) when the profile pattern is determined to be the hat-like or inverted hat-like profile pattern.

11. The quantization bit rate expansion device according to claim 9, wherein
the waveform estimation unit is configured to determine a position of an intermediate point (32) in the flat period (21, 22) based on the ratio of the preceding difference value (36) to the subsequent difference value (37) when the profile pattern is determined to be the right-upward or right-downward profile pattern.

12. The quantization bit rate expansion device according to any one of claims 7 through 11, wherein
the waveform estimation unit is configured to estimate the detailed waveform within a range of one quantizing interval of the audio signal including a sample value for the audio signal.

## Patentansprüche

1. Verfahren zum Erweitern einer Quantisierungsbitrate eines Digitalaudiosignals, wobei das Verfahren umfasst:
einen Flachperiodendetektionsschritt des Detektierens einer Flachperiode (21, 22) von dem Digitalaudiosignal, die eine Periode anzeigt, die mehrere fortwährende Samples mit einem einzelnen Samplewert umfasst;
**gekennzeichnet durch**
einen Strukturbestimmungsschritt des Bestimmens einer Profilstruktur der Flachperiode gemäß einem positiven oder negativen Vorzeichen eines vorhergehenden Differenzwertes (36), der eine Differenz anzeigt, die durch Subtrahieren eines Samplewertes eines Samples, das der Flachperiode (21, 22) unmittelbar vorausgeht, von einem Samplewert der Flachperiode (21, 22) bestimmt ist, und einem positiven oder negativen Vorzeichen eines anschließenden Differenzwertes (37), der eine Differenz anzeigt, die **durch** Subtrahieren des Samplewertes der Flachperiode (21, 22) von einem Samplewert einer Probe unmittelbar nach der Flachperiode (21, 22) bestimmt ist;
einen Wellenformabschätzungsschritt des Abschätzens einer detaillierten Wellenform, die eine höher Auflösung aufweist als eine Wellenform des Audiosignals in der Flachperiode gemäß einem Wellenformabschätzungselement, das die bestimmte Profilstruktur und mindestens eines von einem Verhältnis des vorhergehenden Differenzwertes (36) zum anschließenden Differenzwert (37) und der Anzahl an fortwährenden Proben in der Flachperiode (21, 22) umfasst; und
einen Samplewertbestimmungsschritt des Bestimmens von Samplewerten für entsprechende Samplingzeiten der Flachperiode (21, 22) von der detaillierten Wellenform mittels einer Quantisierungsbitrate, die höher ist als die Quantisierungsbitrate des Audiosignals.

2. Verfahren nach Anspruch 1, wobei
der Wellenformabschätzungsschritt das Abschätzen der detaillierten Wellenform durch Auswählen einer detaillierten Wellenform aus mehreren Wellenformen, die zuvor in einer Tabelle gespeichert wurden, gemäß der Profilstruktur und dem Verhältnis des vorhergehenden Differenzwertes (36) zum anschließenden Differenzwert (37) umfasst.

3. Verfahren nach Anspruch 1 oder 2, wobei
der Strukturbestimmungsschritt ein Schritt des Bestimmens der Profilstruktur der Flachperiode (21, 22) als eine hutartige Profilstruktur im Fall von einem positiven vorhergehenden Differenzwert und einem negativen anschließenden Differenzwert, der Profilstruktur der Flachperiode (21, 22) als eine invertierte hutartige Profilstruktur im Fall von einem negativen vorhergehenden Differenzwert und einem positiven anschließenden Differenzwert, der Profilstruktur der Flachperiode (21, 22) als eine rechts ansteigende Profilstruktur im Fall von einem positiven vorhergehenden Differenzwert und einem positiven anschließenden Differenzwert und der Profilstruktur der Flachperiode (21, 22) als eine rechts abfallende Profilstruktur im Fall von einem negativen vorhergehenden Differenzwert und einem negativen anschließenden Differenzwert ist, und
wobei der Wellenformabschätzungsschritt ein Schritt des Abschätzens einer hutartigen detaillierten Wellenform ist, in der ein Zwischenabschnitt der Flachperiode (21, 22) hoch wird, wenn bestimmt wurde, dass die Profilstruktur die hutartige Profilstruktur ist, einer invertierten hutartigen detaillierten Wellenform, in der ein Zwischenabschnitt der Flachperiode (21, 22) niedrig wird, wenn bestimmt wurde, dass die Profilstruktur die invertierte hutartige Profilstruktur ist, einer rechts ansteigenden detaillierten Wellenform, in der ein rechtes Ende der Flachperiode (21, 22) hoch wird, wenn bestimmt wurde, dass die Profilstruktur die rechts ansteigende Profilstruktur ist, und einer rechts abfallenden detaillierten Wellenform, in der ein rechtes Ende der Flachperiode (21, 22) niedrig wird, wenn bestimmt wurde, dass die Profilstruktur die rechts abfallende Profilstruktur ist.

4. Verfahren nach Anspruch 3, wobei
der Wellenformabschätzungsschritt das Bestimmen eines Wertes des Zwischenabschnitts basierend auf der Anzahl an Samples in der Flachperiode (21, 22) umfasst, wenn bestimmt wurde, dass die Profilstruktur die hutartige oder invertierte hutartige Profilstruktur ist.

5. Verfahren nach Anspruch 3, wobei
der Wellenformabschätzungsschritt das Bestimmen einer Position eines Zwischenpunktes (32) in der Flachperiode (21, 22) basierend auf dem Verhältnis des vorhergehenden Differenzwertes (36) zum anschließenden Differenzwert (37) umfasst, wenn bestimmt wurde, dass die Profilstruktur die rechts ansteigende oder die rechts abfallende Profilstruktur ist.

6. Verfahren nach einem der Ansprüche 1 bis 5, wobei der Wellenformabschätzungsschritt das Abschätzen der detaillierten Wellenform innerhalb eines Bereichs von einem Quantisierungsintervall des Audiosignals umfasst, das einen Samplewert für das Audiosignal umfasst.

7. Quantisierungsbitratenerweiterungsvorrichtung, umfassend:
eine Eingabeeinheit (10), in die ein Digitalaudiosignal eingegeben wird;
eine Flachperiodendetektionseinheit (13), die konfiguriert ist, von dem Audiosignal eine Flachperiode zu detektieren (21, 22), die mehrere fortwährende Samples, die einen einzelnen Samplewert aufweisen, umfasst;
**gekennzeichnet durch**
einen Strukturbestimmungsschritt (14) des Bestimmens einer Profilstruktur der Flachperiode (21, 22) gemäß einem positiven oder negativen Vorzeichen eines vorhergehenden Differenzwertes (36), der eine Differenz anzeigt, die **durch** Subtrahieren eines Samplewertes eines Samples, das der Flachperiode (21, 22) unmittelbar vorausgeht, von einem Samplewert der Flachperiode (21, 22) bestimmt ist, und einem positiven oder negativen Vorzeichen eines anschließenden Differenzwertes (37), der eine Differenz anzeigt, die **durch** Subtrahieren des Samplewertes der Flachperiode (21, 22) von einem Samplewert eines Samples unmittelbar anschließend an die Flachperiode (21, 22) bestimmt ist;
eine Wellenformabschätzungseinheit, die konfiguriert ist, eine detaillierte Wellenform abzuschätzen, die eine höhere Auflösung aufweist als eine Wellenform des Audiosignals in der Flachperiode (21, 22) gemäß einem Wellenformabschätzungselement, das die bestimmte Profilstruktur und mindestens eines von einem Verhältnis des vorhergehenden Differenzwertes (36) zum anschließenden Differenzwert (37) und der Anzahl an fortwährenden Samples in der Flachperiode (21, 22) umfasst; und
eine Samplewertbestimmungseinheit, die konfiguriert ist, Samplewerte für entsprechende Samplingzeiten der Flachperiode (21, 22) von der detaillierten Wellenform mittels einer Quantisierungsbitrate, die höher ist als die Quantisierungsbitrate des Audiosignals, zu bestimmen.

8. Quantisierungsbitratenerweiterungsvorrichtung nach Anspruch 7, wobei
die Wellenformauswerteeinheit eine Tabelle aufweist, in der mehrere Wellenformen gespeichert sind, und die Wellenformauswerteeinheit konfiguriert ist, die detaillierte Wellenform von den mehreren Wellenformen, die in der Tabelle gespeichert sind, gemäß der Profilstruktur und dem Verhältnis des vorhergehenden Differenzwertes (36) zum anschließenden Differenzwert (37) auszuwählen und dadurch die detaillierte Wellenform abzuschätzen.

9. Quantisierungsbitratenerweiterungsvorrichtung nach Anspruch 7 oder 8, wobei
die Strukturbestimmungseinheit (14) konfiguriert ist, die Profilstruktur der Flachperiode (21, 22) als eine hutartige Profilstruktur im Fall von einem positiven vorhergehenden Differenzwert (36) und einem negativen anschließenden Differenzwert (37), die Profilstruktur der Flachperiode (21, 22) als eine invertierte hutartige Profilstruktur im Fall von einem negativen vorhergehenden Differenzwert (36) und einem positiven anschließenden Differenzwert (37), die Profilstruktur der Flachperiode (21, 22) als eine rechts ansteigende Profilstruktur im Fall von einem positiven vorhergehenden Differenzwert (36) und einem positiven anschließenden Differenzwert (37) und die Profilstruktur der Flachperiode (21, 22) als eine rechts abfallende Profilstruktur im Fall von einem negativen vorhergehenden Differenzwert (36) und einem negativen anschließenden Differenzwert (37) zu bestimmen; und
die Wellenformabschätzungseinheit konfiguriert ist, eine hutartige detaillierte Wellenform, in der ein Zwischenabschnitt der Flachperiode (21, 22) hoch wird, wenn bestimmt wurde, dass die Profilstruktur die hutartige Profilstruktur ist, eine invertierte hutartige detaillierte Wellenform, in der ein Zwischenabschnitt der Flachperiode (21, 22) niedrig wird, wenn bestimmt wurde, dass die Profilstruktur die invertierte hutartige Profilstruktur ist, eine rechts ansteigende detaillierte Wellenform, in der ein rechtes Ende der Flachperiode (21, 22) hoch wird, wenn bestimmt wurde, dass die Profilstruktur die rechts ansteigende Profilstruktur ist, und eine rechts abfallende detaillierte Wellenform, in der ein rechtes Ende der Flachperiode (21, 22) niedrig wird, wenn bestimmt wurde, dass die Profilstruktur die rechts abfallende Profilstruktur ist, abzuschätzen.

10. Quantisierungsbitratenerweiterungsvorrichtung nach Anspruch 9, wobei
der Wellenformabschätzungsschritt das Bestimmen eines Wertes des Zwischenabschnitts basierend auf der Anzahl an Samples in der Flachperiode (21, 22) umfasst, wenn bestimmt wurde, dass die Profilstruktur die hutartige oder invertierte hutartige Profilstruktur ist.

11. Quantisierungsbitratenerweiterungsvorrichtung nach Anspruch 9, wobei
die Wellenformabschätzungseinheit konfiguriert ist, eine Position eines Zwischenpunktes (32) in der Flachperiode (21, 22) basierend auf dem Verhältnis des vorhergehenden Differenzwertes (36) zum anschließenden Differenzwert (37) zu bestimmen, wenn bestimmt wurde, dass die Profilstruktur die rechts ansteigende oder die rechts abfallende Profilstruktur ist.

12. Quantisierungsbitratenerweiterungsvorrichtung nach einem der Ansprüche 7 bis 11, wobei
der Wellenformabschätzungsschritt konfiguriert ist, die detaillierte Wellenform innerhalb eines Bereichs eines Quantisierungsintervalls des Audiosignals abzuschätzen, das einen Samplewert für das Audiosignal umfasst.

## Revendications

1. Procédé d'extension d'un débit binaire de quantification d'un signal audio numérique, le procédé comprenant :
une étape de détection de période stable consistant à détecter, à partir du signal audio numérique, une période stable (21, 22) qui indique une période incluant une pluralité d'échantillons continus présentant une unique valeur d'échantillon ;
***caractérisé par***
une étape de détermination de modèle consistant à déterminer un modèle de profil de la période stable selon un signe positif ou négatif d'une valeur de différence précédente (36) qui indique une différence déterminée en soustrayant une valeur d'échantillon d'un échantillon précédant immédiatement la période stable (21, 22) d'une valeur d'échantillon de la période stable (21, 22), et selon un signe positif ou négatif d'une valeur de différence subséquente (37) qui indique une différence déterminée en soustrayant la valeur d'échantillon de la période stable (21, 22) d'une valeur d'échantillon d'un échantillon immédiatement subséquent à la période stable (21, 22) ;
une étape d'estimation de forme d'onde consistant à estimer une forme d'onde détaillée qui est supérieure, en termes de résolution, à une forme d'onde du signal audio dans la période stable, selon un élément d'estimation de forme d'onde incluant le modèle de profil déterminé et au moins l'un parmi un rapport de la valeur de différence précédente (36) à la valeur de différence subséquente (37) et le nombre d'échantillons continus dans la période stable (21, 22) ; et
une étape de détermination de valeurs d'échantillons consistant à déterminer, à partir de la forme d'onde détaillée, des valeurs d'échantillons pour des instants d'échantillonnage respectifs de la période stable (21, 22), au moyen d'un débit binaire de quantification qui est supérieur au débit binaire de quantification du signal audio.

2. Procédé selon la revendication 1, dans lequel :
l'étape d'estimation de forme d'onde consiste à estimer la forme d'onde détaillée en sélectionnant une forme d'onde détaillée parmi une pluralité de formes d'onde précédemment stockées dans une table selon le modèle de profil et le rapport de la valeur de différence précédente (36) à la valeur de différence subséquente (37).

3. Procédé selon la revendication 1 ou 2, dans lequel :
l'étape de détermination de modèle est une étape consistant à déterminer le modèle de profil de la période stable (21, 22) en tant qu'un modèle de profil en forme de chapeau dans le cas d'une valeur de différence précédente positive et d'une valeur de différence subséquente négative, le modèle de profil de la période stable (21, 22) en tant qu'un modèle de profil en forme de chapeau inversé dans le cas d'une valeur de différence précédente négative et d'une valeur de différence subséquente positive, le modèle de profil de la période stable (21, 22) en tant qu'un modèle de profil vers la droite et vers le haut dans le cas d'une valeur de différence précédente positive et d'une valeur de différence subséquente positive, et le modèle de profil de la période stable (21, 22) en tant qu'un modèle de profil vers la droite et vers le bas dans le cas d'une valeur de différence précédente négative et d'une valeur de différence subséquente négative ; et
l'étape d'estimation de forme d'onde est une étape consistant à estimer une forme d'onde détaillée en forme de chapeau dans laquelle une partie intermédiaire de la période stable (21, 22) devient élevée lorsque le modèle de profil est déterminé comme étant le modèle de profil en forme de chapeau, une forme d'onde détaillée en forme de chapeau inversé dans laquelle une partie intermédiaire de la période stable (21, 22) devient faible lorsque le modèle de profil est déterminé comme étant le modèle de profil en forme de chapeau inversé, une forme d'onde détaillée vers la droite et vers le haut dans laquelle une extrémité droite de la période stable (21, 22) devient élevée lorsque le modèle de profil est déterminé comme étant le modèle de profil vers la droite et vers le haut, et une forme d'onde détaillée vers la droite et vers le bas dans laquelle une extrémité droite de la période stable (21, 22) devient faible lorsque le modèle de profil est déterminé comme étant le modèle de profil vers la droite et vers le bas.

4. Procédé selon la revendication 3, dans lequel l'étape d'estimation de forme d'onde inclut l'étape consistant à déterminer une valeur de la partie intermédiaire sur la base du nombre d'échantillons dans la période stable (21, 22) lorsque le modèle de profil est déterminé comme étant le modèle de profil en forme de chapeau ou le modèle de profil en forme de chapeau inversé.

5. Procédé selon la revendication 3, dans lequel :
l'étape d'estimation de forme d'onde inclut l'étape consistant à déterminer une position d'un point intermédiaire (32) dans la période stable (21, 22) sur la base du rapport de la valeur de différence précédente (36) à la valeur de différence subséquente (37) lorsque le modèle de profil est déterminé comme étant le modèle de profil vers la droite et vers le haut ou le modèle de profil vers la droite et vers le bas.

6. Procédé selon l'une quelconque des revendications 1 à 5, dans lequel :
l'étape d'estimation de forme d'onde inclut l'étape consistant à estimer la forme d'onde détaillée dans une plage d'un intervalle de quantification du signal audio incluant une valeur d'échantillon pour le signal audio.

7. Dispositif d'extension de débit binaire de quantification, comprenant :
une unité d'entrée (10) à laquelle un signal audio numérique est appliqué en entrée ;
une unité de détection de période stable (13) qui est configurée de manière à détecter, à partir du signal audio, une période stable (21, 22) incluant une pluralité d'échantillons continus qui présentent une unique valeur d'échantillon ;
***caractérisé par***
une unité de détermination de modèles (14) qui est configurée de manière à déterminer un modèle de profil de la période stable (21, 22) selon un signe positif ou négatif d'une valeur de différence précédente (36) qui indique une différence déterminée en soustrayant une valeur d'échantillon d'un échantillon précédant immédiatement la période stable (21, 22) d'une valeur d'échantillon de la période stable (21, 22), et selon un signe positif ou négatif d'une valeur de différence subséquente (37) qui indique une valeur de différence déterminée en soustrayant la valeur d'échantillon de la période stable (21, 22) d'une valeur d'échantillon d'un échantillon immédiatement subséquent à la période stable (21, 22) ;
une unité d'estimation de forme d'onde qui est configurée de manière à estimer une forme d'onde détaillée qui est supérieure, en termes de résolution, à une forme d'onde du signal audio dans la période stable (21, 22), selon un élément d'estimation de forme d'onde incluant le modèle de profil déterminé et au moins l'un parmi un rapport de la valeur de différence précédente (36) à la valeur de différence subséquente (37) et le nombre d'échantillons continus dans la période stable (21, 22) ; et
une unité de détermination de valeurs d'échantillons qui est configurée de manière à déterminer, à partir de la forme d'onde détaillée, des valeurs d'échantillons pour des instants d'échantillonnage respectifs de la période stable (21, 22), au moyen d'un débit binaire de quantification qui est supérieur au débit binaire de quantification du signal audio.

8. Dispositif d'extension de débit binaire de quantification selon la revendication 7, dans lequel
l'unité d'estimation de forme d'onde présente une table dans laquelle une pluralité de formes d'onde est stockée, et l'unité d'estimation de forme d'onde est configurée de manière à sélectionner la forme d'onde détaillée parmi la pluralité de formes d'onde stockée dans la table, selon le modèle de profil et le rapport de la valeur de différence précédente (36) à la valeur de différence subséquente (37), ce qui permet d'estimer par conséquent la forme d'onde détaillée.

9. Dispositif d'extension de débit binaire de quantification selon la revendication 7 ou 8, dans lequel :
l'unité de détermination de modèles (14) est configurée de manière à déterminer le modèle de profil de la période stable (21, 22) en tant qu'un modèle de profil en forme de chapeau dans le cas d'une valeur de différence précédente positive (36) et d'une valeur de différence subséquente négative (37), le modèle de profil de la période stable (21, 22) en tant qu'un modèle de profil en forme de chapeau inversé dans le cas d'une valeur de différence précédente négative (36) et d'une valeur de différence subséquente positive (37), le modèle de profil de la période stable (21, 22) en tant qu'un modèle de profil vers la droite et vers le haut dans le cas d'une valeur de différence précédente positive (36) et d'une valeur de différence subséquente positive (37), et le modèle de profil de la période stable (21, 22) en tant qu'un modèle de profil vers la droite et vers le bas dans le cas d'une valeur de différence précédente négative (36) et d'une valeur de différence subséquente négative (37) ; et
l'unité d'estimation de forme d'onde est configurée de manière à estimer une forme d'onde détaillée en forme de chapeau dans laquelle une partie intermédiaire de la période stable (21, 22) devient élevée lorsque le modèle de profil est déterminé comme étant le modèle de profil en forme de chapeau, une forme d'onde détaillée en forme de chapeau inversé dans laquelle une partie intermédiaire de la période stable (21, 22) devient faible lorsque le modèle de profil est déterminé comme étant le modèle de profil en forme de chapeau inversé, une forme d'onde détaillée vers la droite et vers le haut dans laquelle une extrémité droite de la période stable (21, 22) devient élevée lorsque le modèle de profil est déterminé comme étant le modèle de profil vers la droite et vers le haut, et une forme d'onde détaillée vers la droite et vers le bas dans laquelle une extrémité droite de la période stable (21, 22) devient faible lorsque le modèle de profil est déterminé comme étant le modèle de profil vers la droite et vers le bas.

10. Dispositif d'extension de débit binaire de quantification selon la revendication 9, dans lequel :
l'unité d'estimation de forme d'onde est configurée de manière à déterminer une valeur de la partie intermédiaire sur la base du nombre d'échantillons dans la période stable (21, 22) lorsque le modèle de profil est déterminé comme étant le modèle de profil en forme de chapeau ou le modèle de profil en forme de chapeau inversé.

11. Dispositif d'extension de débit binaire de quantification selon la revendication 9, dans lequel :
l'unité d'estimation de forme d'onde est configurée de manière à déterminer une position d'un point intermédiaire (32) dans la période stable (21, 22) sur la base du rapport de la valeur de différence précédente (36) à la valeur de différence subséquente (37) lorsque le modèle de profil est déterminé comme étant le modèle de profil vers la droite et vers le haut ou le modèle de profil vers la droite et vers le bas.

12. Dispositif d'extension de débit binaire de quantification selon l'une quelconque des revendications 7 à 11, dans lequel :
l'unité d'estimation de forme d'onde est configurée de manière à estimer la forme d'onde détaillée dans une plage d'un intervalle de quantification du signal audio incluant une valeur d'échantillon pour le signal audio.
